# EUROPEAN PATENT APPLICATION

(11) **EP 2 774 941 A1**
(43) Date of publication of application: **10.09.2014**
(21) Application number: 13157927.8
(22) Date of filing: 06.03.2013
(51) Int. Cl.: C08G 65/00

(54) **Branched polycarboxylate ethers**

(71) Applicant: Construction Research & Technology GmbH, 83308 Trostberg (DE)
(72) Inventor: Raether, Roman Benedikt, 67346 Speyer (DE); Flakus, Silke, 85560 Ebersberg (DE); Dengler, Joachim, 83342 Tacherting (DE); Zeminian, Nicoletta, 31100 Treviso (IT); Ros, Ida, Zero Branco (IT)

(57) **Abstract**

The invention relates to branched polyether macromonomers, which comprise structural units, derived by copolymerisation of alkylene oxides and glycol glycidyl ethers. It relates to a method of manufacturing a polyether macromonomer wherein either in a polyaddition reaction an unsaturated alcohol is reacted with an alkylene oxide and an glycol glycidyl ether, or a branched mono hydroxy polyalkylenoxide, derived by polyaddition of alkylene oxides with alkylene glycol glycidyl ethers is esterified with (meth)acrylic acid. It further comprises a (co)polymer containing structural units being derived from the polyether macromonomers. As methods of use of the (co)polymers in aqueous mixtures of inorganic particles are concerned the use as dispersant, as a means for reduction of the viscosity of concrete and as grinding aid for the production of (Portland) cement. The invention concerns also building material mixtures containing a (co)polymer according to this invention.

## Description

The invention relates to a polyether macromonomer, a method of manufacturing the polyether macromonomer and (co)polymers containing structural units being derived from the polyether macromonomers. The invention concerns also the use of the (co)polymers as dispersant for aqueous mixtures of inorganic particles, the use as a means for reduction of the viscosity of aqueous mixtures of inorganic particles and the use as a grinding aid for the production of (Portland) cement. Also concerned are building material mixtures containing a (co)polymer according to this invention.

It is known that admixtures in the form of dispersants are often added to aqueous slurries of pulverulent inorganic or organic substances, such as clays, silicate powders, chalks, carbon blacks, powdered rocks and hydraulic binders, for improving their workability, i.e. kneadability, placeability, spreadability, sprayability, pumpability or flowability. Such admixtures are capable of breaking up solid agglomerates, dispersing the particles formed and in this way improving the fluidity. This effect is also utilised in a targeted manner in particular in the preparation of building material mixtures which contain hydraulic binders, such as cement, lime, gypsum, calcium sulphate hemihydrate (bassanite), anhydrous calcium sulphate (anhydrite), or latent hydraulic binders, such as fly ash, blast furnace slag or pozzolans.

In order to convert these building material mixtures based on said binders into a ready-to-use, workable form, as a rule substantially more mixing water is required than would be necessary for the subsequent hydration and hardening process. The proportion of cavities which are formed in the concrete body by the excess water which subsequently evaporates leads to significantly poorer mechanical strengths and durabilities.

In order to reduce this excess proportion of water at a predetermined processing consistency and/or to improve the workability at a predetermined water/binder ratio, admixtures which are generally referred to as water-reducer compositions or plasticizers are used. In particular, copolymers which are prepared by free radical copolymerization of acid monomers with polyether macromonomers are used in practice as such compositions.

Dispersants are used in the concrete technology in order to improve the workability (at the same W/C ratio) or in order to keep the same workability (at a lowered W/C ratio). In this way also the pumpability of the concrete can be improved. Used as dispersants are for example lignosulphonates, sulphonated melamin formaldehyde resins and naphthalin-formaldehyde resins. Especially important dispersants are polycarboxylates. Examples of polycarboxylates are copolymers of maleic acid and/or acrylic acid with polyether macromonomers (e.g. polyether macromonomers like alkoxylated vinyl ethers or (meth)acrylate esters of alkyl polyalkylene glycols).

Dispersants based on polycarboxylate ethers (PCEs) can be adapted to the requirements of the concrete industry very individually by modifying the chemical composition of the polymers. PCEs show usually a carbon backbone with acid chains attached to it and polyether side chains. It is possible to introduce various side chain lengths and charges in order to be able to obtain concrete of a very high quality.

For precast applications a high workability (good dispersibility) together with good early strength development properties is demanded. However such polycarboxylate ethers show usually a rather high viscosity of the concrete in the fresh state. Especially at lower water / cement ratios (W/C ratios) the viscosity becomes high. It is only possible to fill the precast moulds with a high labor input for consolidating the concrete (vibration) and it takes a rather long time. On the other side the PCEs showing a sufficient dispersibility and good early strength development have rather long polyethylene glycol side chains in their polymer structure. It is supposed that by entanglement of the rather long side chains the viscosity of the concrete increases, as the cement particles are due to said entanglement no more completely dispersed (separated) from each other.

Transport concrete needs a good slump-retention due to the rather long transport times of the concrete from the production site to the construction site. As the pressure of concrete pumps used for pumping the concrete correlates with the viscosity of the concrete (Buckingham-Reiner equation), the viscosity should be low over a long period of time in order to keep the mechanical friction and abrasion of the equipment low.

Technical solutions, which would combine in a sufficient way both low viscosity of the concrete as well as high dispersibility and good early strength development are currently required by the market.

In WO 2007037469 A1 allyl glycidylether is used in order to introduce polymerizable groups into amphiphilic polymers.

WO 2002/053611 A1 describes the use of glycidyl methacrylate for the introduction of polymerizable groups into water-soluble polyether macromonomers for the production of cement additives.

EP 1 531 933 B1 discloses glycidyl ether copolymerized into poly alkylene oxides, with the glycidyl ether rests bearing 1 to 50 carbon atoms, the carbon atoms can comprise heteroatoms. Explicitly only hydrophobic side chains are mentioned (e.g. phenyl glycidylether oder 2-ethylhexyl glycidylether side chains). Said hydrophobic side chains are necessary for the use of the polymers as polymerizable emulsifier. The use of methoxy oligoalkylene oxide glycidylethers is not mentioned.

WO 2000/068272 A1 discloses the use of methoxy polyethylene glycol glycidyl ethers for the chemical modification of sulphated polysaccharides. The polysaccharide derivatives are used as a cement dispersant. They differ essentially in the backbone and the side chain of the polymer in comparison to the polycarboxylates of this invention.

EP 1 707 542 A2 discloses a powdery cement dispersant, which is said to possess superior dispersibility and seems to be easy to be pulverized. The dispersant comprises repeating units derived from an unsaturated polyalkylene glycol type monomer, unsaturated carboxylic acid type monomer and a repeating unit derived from a branched compound monomer having a branched structure containing 3 or more polyalkyleneimine chains or polyoxyalkylene chains in a molecule.

In all of the prior art citations the use of mono-, oligo- or polyalkylene oxide glycidylethers is not mentioned in the context of polycarboxylate ethers obtainable by radical polymerization for the use as cement dispersants.

The object of the present invention is therefore to overcome the problems of the current polycarboxylate ether technologies. Particular it is object to provide polycarboxlate ethers with a high dispersibility, which allow to produce concrete with a low viscosity and a good early strength development. In particular it is object of the present invention to provide low viscosity cementitious systems, especially low viscosity concretes.

The solution to the object is polyether macromonomers according to general formula (I)

(I) U-(C=O)_{w}-O-(A¹)ₓ-(CH₂CH[V]O)_{y}-R¹,

wherein in general formula (I)
U is an unsaturated structural unit with 2 to 10 carbon atoms, which comprises one polymerizable carbon - carbon double bond, preferably not more than one polymerizable carbon - carbon double bond,
w is 0 or 1, with the condition that w is 0 if U is different from CH₂=CH- and CH₂=C(Me)-,
A¹ is the same or different and is independently from each other a branched or linear alkylene with 2 to 10 carbon atoms, -CH₂-CH(phenyl)-, -CH₂-CH(CH₂-COOR⁴)- and/or -CH₂-CH(CH₂-N⁺(C-1 to C-1 0 alkyl)₃ X- - with the proviso that the mol percentage of - CH₂-CH(CH₂-COOR⁴)- and -CH₂-CH(CH₂-N⁺( C-1 to C-10 alkyl)₃ X⁻ - is in each case less than 30 mol %, more preferably less than 20 mol %, more preferably less than 10 mol %, with respect to all units A¹, more preferably less than 5 mol % with respect to all units A¹,
R⁴ is is the same or different and is independently from each other a C-1 to C-1 0 linear or branched alkyl group, H or a cation, preferably an (earth) alkali metal,
X- is an anion, preferably X- is a halogenide,
x is an integer from 10 to 300,
y is an integer from 1 to 50,
R¹ is H or a saturated hydrocarbon, preferably H and/or a C-1 to C-20 branched or linear alkyl group, most preferably H and/or a methyl group,
[V] is represented by the general formula (II)

   (II) -CH₂-O-(A²O)_{z}-R²,
wherein in general formula (II)
A² is the same or different and is independently from each other a branched or linear alkylene with 2 to 10 carbon atoms, preferably 2 carbon atoms, -CH₂-CH(phenyl)-, with the proviso that the mol percentage of -CH₂-CH(phenyl)- is less than 30 mol %, preferably less than 20 mol %, more preferably less than 10 mol %, with respect to all units A²,
z is the same or different and is independently from each other an integer between 1 and 50, preferably an integer between 2 and 20, more preferably an integer between 2 and 10, most preferably between 3 and 7,
R² is the same or different and is independently from each other a saturated hydrocarbon or hydrogen, preferably a C-1 to C-20 branched or linear alkyl group, most preferably a methyl group.

Preferably the structure -CH₂-CH(CH₂-N⁺( C-1 to C-1 0 alkyl)₃ is -CH₂-CH(CH₂-N⁺(methyl)₃. Preferably A² is the same or different and is independently from each other a branched or linear alkylene with 2 to 10 carbon atoms, preferably 2 carbon atoms.

The solution to the object is also a method of manufacturing of a polyether macromonomer according to this invention and according to general formula (I), wherein in a polyaddition reaction in a
first process step
i) an a) unsaturated alcohol of the general formula

   (IV) U-(C=O)_{w}-OH,

   wherein in general formula (IV)
   U has the same meaning as in formula (I), w is 0 in general formula (IV) and in general formula (I),
   is reacted with
b) one or more than one species of an alkylene oxide A¹O with A¹ having the same meaning as in formula (I) and
c) one or more than one species of a glycidylether according to general formula (V) 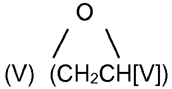 wherein in general formula (V) the parameter [V] has the same meaning as in formula (II), to result in a polyether macromonomer alcohol of formula (I) with R¹ being H, and optionally followed by a second process step ii), which is an etherification of the hydroxy group of the polyether macromonomer alcohol of formula (I), replacing H by a saturated hydrocarbon, preferably a C-1 to C-20 branched or linear alkyl group, most preferably a methyl group.

Solution to the object of the present invention are also (co)polymers containing structural units being derived from the polyether macromonomers according to this invention, preferably the polyether macromonomer being incorporated into the (co)polymer by radical polymerization, a method of use of the (co)polymers according to this invention as a dispersant and also as a means for reduction of the viscosity of aqueous mixtures of inorganic particles, preferably for inorganic binders selected from the group of (Portland) cement, α -calciumsulfate-hemihydrat, β -calciumsulfate-hemihydrate, calciumsulfate in the form of anhydrite, lime, furnace slag, fly ash, silica fume, natural puzzolane and/or calcined oil shale, preferably (Portland) cement is contained with a weight percentage higher than 40 % with respect to the sum of the inorganic binders. The object is also solved by the method of use of (co)polymers according to this invention as a grinding aid for the production of (Portland) cement and by building material mixtures containing a copolymer according to this invention and inorganic binders selected from the group of (Portland) cement, α -calciumsulfate-hemihydrat, β - calciumsulfate-hemihydrate, calciumsulfate in the form of anhydrite, lime, furnace slag, fly ash, silica fume, natural puzzolane and/or calcined oil shale, preferably (Portland) cement is contained with a weight percentage higher than 40 % with respect to the sum of the inorganic binders, optionally water is contained.

The polyether macromonomers according to this invention (intermediate product for the production of the polycarboxylates) are hydrophilic branched structures. The branched structures have the advantage that an entanglement (as in the case of simple non-branched polyether side chains) is not so easily possible, because the hydrodynamic radius of the dispersed particles decreases when branched side-chains are used. This is also due to the fact that the radius of the dispersed cement particles decreases in the case of the branched structures. The branched side chains are on the average not so long (same mass of branched and not branched side-chain) compared to the not branched side-chains. It becomes apparent from the general formula (I) that in the polyether macromonomer besides the polymerizable group U and besides the alkylene oxide repeating units (A¹O) further repeating units (CH₂CH[V]O) are contained. It is said last unit, which introduces a branched structure, especially by the presence of V, which is according to formula (II) also a polyether structure. The use of the branched polyether macromonomers in the polymerization of the copolymers allows to reduce the viscosity of concrete as will be shown in the following text.

U in general formula (I) is an unsaturated structural unit with 2 to 10 carbon atoms which comprises one polymerizable carbon-carbon double bond, preferably a hydrocarbon unit with one unsaturated polymerizable carbon-carbon double bond. Examples for U are CH₂=CH- (vinyl residue), allyl residue, methallyl residue, isoprenol residue (CH₂=C(CH₃)-(CH₂)₂-), CH₂=C-CH₂-CH₂- and a cyclic vinyl ether according to general formula (III)

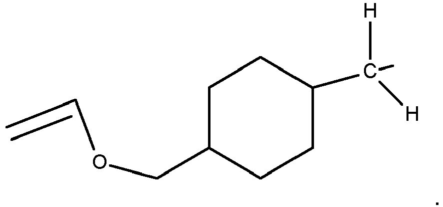

The parameter w in general formula (I) is 0 or 1, with the condition that w is 0 if U is different from CH₂=CH- and CH₂=C(Me)-.

If U is CH₂=CH-, then w can be 0 or 1. If U is CH₂=C(Me)-, then w is preferably 1. This means that (meth)acrylic acid ester derivatives are concerned if w is 1 and U is CH₂=CH- or CH₂=C(Me)-.

A¹ in general formula (I) is the same or different and is independently from each other preferably a branched or linear alkylene with 2 to 10 carbon atoms and/or -CH₂-CH(phenyl)-, more preferably an alkylene with 2 carbon atoms.

Preferably the partial structural unit U-(C=O)_{w}-O- in formula (I) can be selected from residues of vinyl ethers (w = 0), allyl ethers (w = 0), methallyl ethers (w = 0), isoprenol ethers (w = 0) and (meth)acrylic acid esters (w = 1).

In the polyether macromonomers according to general formula (I) it is possible that the meaning of the parameters A¹, [V], z, A² and R² in general formula (I) can be independently different. This is the case because said parameters can be present in multiple form as expressed by the indices x and y and do not have to be the same in one polyether macromonomer.

Preferably A¹ is the same or different and is independently from each othera branched or linear alkylene with 2 to 10 carbon atoms. More preferably more than 70 mol % of A¹ are an alkylene with 2 carbon atoms (ethylene) in order to achieve sufficiently hydrophilic properties of the copolymers.

It is possible that the repeating units (A¹O)ₓ and (CH₂CH[V]O)_{y} are contained in the polyether macromonomer, wherein in general formula (I) the alkylene oxide units A¹O and units CH₂CH[V]O are contained in a statistical distribution, in block form or in form of gradient. Preferable are polyether macromonomers, wherein in general formula (I) the alkylene oxide units A¹O and units CH₂CH[V]O are contained in a statistical distribution, in block form or in form of a gradient copolymer.

The addition of the units A¹O (in the form of the respective alkylene oxide(s)) and the units according to general formula (V) can be done in a consecutively, simultaneously or in a graded order, depending on the desired architecture and molecular shape of the polyether macromonomer, yielding block, gradient or statistical copolymers.

A statistical distribution means that the alkylene oxide units A¹O and units CH₂CH[V]O are distributed along the chain uniformly.

Block form means that the two or more kinds of repeating units are present in the form of two or more blocks. More preferably multiple blocks are present. This means that there are several blocks of each kind of repating units A¹O and CH₂CH[V]O present. Preferably between two and 20 blocks, more preferably between 4 and 15, most preferably between 4 and 10 of each units A¹O and between two and 20 blocks, more preferably between 4 and 15, most preferably between 4 and 10, of each unit CH₂CH[V]O are present independently from each other. A block is to be understood as a sequence of units of the same kind.

Preferably in the polyether macromonomers in general formula (I) the alkylene oxide units A¹O and units CH₂CH[V]O are contained in a multiple block copolymer form. A multiple block copolymer is preferably obtained by consecutive addition of the monomer units A¹O (in the form of the respective alkylene oxide(s)) and units according to general formula (V) as is for example indicated in the experimental part.

Preferable are polyether macromonomers, wherein U is a) selected from alkenyl groups with 2 to 5 carbon atoms, with w is 0 or b) U is selected from CH₂=C(R³)-, in which case in general formula (I) w is 1 and R³ is H or methyl, preferably R¹ in general formula (I) is a saturated hydrocarbon, more preferably a C-1 to C-20 branched or linear alkyl group, most preferably a methyl group, or U is c) a vinyl ether according to formula (III) with w is 0:

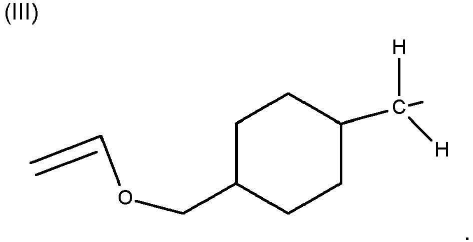

In the case a) the unsaturated structural unit can be derived from a vinyl ether structure, an allylether structure, a methallyl ether structure or an isoprenol ether structure. Concrete examples of such polyether macromonomers are polyalkoxylates of hydroxybutyl vinyl ether, hydroxyethyl vinyl ether, (meth)allyl alcohol and isoprenol.

In the case b) (meth)acrylic acid derivatives are meant. Concrete examples are mono hydroxy functionalized polyalkoxylates, which are esterified with (meth)acrylic acid.

In the case c) the vinyl ether derivative is rather hydrophobic and this kind of monomer is supposed to be well polymerizable and has a lower tendency to hydrolyze at the vinyl function. The polyether macromonomer can be obtained in this case by treating the dialcohol cyclohexane dimethylol with acetylene. The obtained monoalcohol can be further alkoxylated to obtain the macromonomers according to this invention.

Preferable are polyether macromonomers, wherein w is 0 and U is an alkenyl group with 2 to 5 carbon atoms and is selected from CH₂=CH-, CH₂=CR³-CH₂- or CH₂=C(CH₃)-(CH₂)₂-, wherein R³ is H or methyl. It is preferable that R³ is H as an additional reaction step (etherification of the OH group) becomes superfluous.

Preferable are polyether macromonomers, wherein in general formula (I) x is an integer from 20 to 150, y is an integer from 1 to 30, preferably 1 to 20, and the mol percentage of C-2 alkylene (ethylene) in A¹ is higher than 80 mol % with respect to all alkylenes A¹, and in general formula (II) the mol percentage of C-2 alkylene (ethylene) in A² is higher than 80 mol % with respect to all alkylenes A² and z is the same or different and is independently from each other an integer between 1 and 10, preferably an integer between 2 and 10.

It is preferably that the hydrophilic character of the polyether side chains is rather high in order to ensure a sufficient solubility in water.

The number of branches is given by y and most preferably is 1 to 10, the effects of the branches are high dispersion stability at a low viscosity of the concrete and a high ratio of cement particle shielding to surface coverage. A high ratio of cement particle shielding to surface coverage means in particular that the concrete is well dispersed (the cement particles against each other), but the surface of the cement particles are not too much covered by the dispersant. If the cement particle would be too much covered by the dispersant, then an undesirable retardation effect often occurs.

More preferable is a polyether macromonomer, wherein in general formula (I) x is an integer from 20 to 100, y is an integer from 3 to 10 and the mol percentage of C-2 alkylene (ethylene) in A¹ is higher than 90 mol % with respect to all alkylenes A¹, and in general formula (II) the mol percentage of C-2 alkylene (ethylene) in A² is higher than 90 mol % with respect to all alkylenes A² and z is an integer between 1 and 5, preferably an integer between 2 and 5.

Preferable is a polyether macromonomer, wherein U is CH₂=CR³-, w is 1, R³ is H or methyl, R¹ is a saturated hydrocarbon, preferably a C-1 to C-20 branched or linear alkyl group, more preferably a C-1 to C-6 branched or linear alkyl group. Most preferably R¹ is a methyl group. In this case (meth)acrylic acid ester derivatives are used as the polyether macromonomer. R¹ as an end group has the advantage that it is possible to avoid possible side products, which would have two polymerizable groups and might lead to a cross linking of the copolymers in for example a radical copolymerization reaction involving the polyether macromonomers of this invention.

Preferable are polyether macromonomers, wherein the mol percentage of -CH₂-CH(CH₂-COOR⁴)- or-CH₂-CH(CH₂-N⁺(C-1 to C-1 0 alkyl)₃ X⁻ - is from 0.5 mol % to 5 mol % with respect to all units A¹. R⁴ is is the same or different and is independently from each other a C-1 to C-1 0 linear or branched alkyl group, H or a cation. The cation can be independently from each other an ammonium ion, alkali cation or any other cation with the proviso that the mol number of the cation is divided with its number of cationic charges, preferably the cation is ½ earth alkali cation. Preferably A¹ is derived from hydrolyzable 2,3-epoxypropionic acid ester monomers and A¹ is -CH₂-CH(CH₂-COOR⁴)-, R⁴ is a C-1 to C-1 0 linear or branched alkyl group. The hydrolyzable group is the ester group, which provides then for the anionic charge, for example in form of carboxylate groups after saponification in a strongly alkaline system like concrete. The carboxylate group can be also present partially or wholly in its acid form. In -CH₂-CH(CH₂-N⁺( C-1 to C-1 0 alkyl)₃ preferably C-1 to C-10 alkyl is a C1 alkyl ( methyl group).

Preferably A¹ is in the case of cationic charges derived from glycidyltri-C1-C10- alkylammonium salt monomers and A¹ is -CH₂-CH(CH₂-N⁺( C-1 to C-1 0 alkyl)₃)-X-, more preferably A¹ is -CH₂-CH(CH₂-N⁺( methyl)₃)-X⁻. X- is an anion with the proviso that the mol number of X- is divided with its number of anionic charges, preferably X- is a halogenide, more preferably a chloride. X⁻ is not especially limited, preferably it is a halogenide or ½ sulphate.

It was found that anionic or cationic charges in the polyether macromonomer side chain incorporated in A¹ have a positive effect due to their mutual repulsion force, which results in a better unfolding of the side chains and repulsion of dispersed cement particles, resulting in an increasing dispersion stability of the concrete made with the (co)polymers according to this invention.

Preferable are polyether macromonomers, wherein a branching factor is defined as the quotient of index y and index x (y/x) in general formula (I) and the value of the branching factor is from 0.01 to 0.8, preferably 0.05 to 0.2. The branching factor indicates the degree of the branchings of the side-chains. Effects of the branches are high dispersion stability at low viscosity of concrete and a high ratio of cement particle shielding to surface coverage.

There are basically two ways to produce the polyether macromonomers of this invention. One method begins with the polyaddition of b) an alkylene oxide and c) a glycidylether according to general formula (V) to an unsaturated alcohol (first method). The other method is to add an alkyleneoxide A¹O with c) a glycidylether according to general formula (V) to a saturated alcohol and then perform the esterification of the obtained alcohol with an unsaturated acid, preferably (meth)acrylic acid (second method). A¹ has in each case the before mentioned meaning.

The invention relates also to a method of manufacturing a polyether macromonomer according to general formula (I), wherein in a polyaddition reaction in a first process step
i) an a) unsaturated alcohol of the general formula

   (IV) U-(C=O)_{w}-OH,

   wherein in general formula (IV) U has the same meaning as in formula (I),
   w is 0 in general formula (IV) and in general formula (I),
   is reacted with
b) one or more than one species of an alkylene oxide A¹O, with A¹ having the same meaning as in formula (I) and
c) one or more than one species of a glycidylether according to general formula (V) 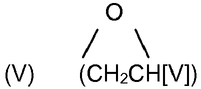 wherein in general formula (V) the parameter [V] has the same meaning as in formula (II), to result in a polyether macromonomer alcohol of formula (I) with R¹ being H, and optionally followed by a
   second process step ii), which is an etherification of the hydroxy group of the polyether macromonomer alcohol of formula (I), replacing H by a saturated hydrocarbon, preferably a C-1 to C-20 branched or linear alkyl group, most preferably a methyl group.
   In general formula (I) R¹ is preferably H.

Preferable alkylene oxides b) A¹O are for example ethylene oxide and/or propylene oxide.

Preferable glycidylethers according to general formula (V) are ethylene glycole methyl glycidyl ether, diethylene glycol methyl glycidyl ether, triethylene glycol methyl glycidyl ether, tetraethylene glycol methyl glycidyl ether, pentaethylene glycol methyl glycidyl ether, hexaethylene glycol methyl glycidyl ether, heptaaethylene glycol methyl glycidyl ether, octaaethylene glycol methyl glycidyl ether, nonaethylene glycol methyl glycidyl ether, dekaethylene glycol methyl glycidyl ether, ethylene glycole ethyl glycidyl ether, diethylene glycol ethyl glycidyl ether, triethylene glycol ethyl glycidyl ether, tetraethylene glycol ethyl glycidyl ether, pentaethylene glycol ethyl glycidyl ether, hexaethylene glycol ethyl glycidyl ether, heptaaethylene glycol ethyl glycidyl ether, octaaethylene glycol ethyl glycidyl ether, nonaethylene glycol ethyl glycidyl ether, dekaethylene glycol ethyl glycidyl ether, ethylene glycole propyl glycidyl ether, diethylene glycol propyl glycidyl ether, triethylene glycol propyl glycidyl ether, tetraethylene glycol propyl glycidyl ether. The more hydrophilic ethylene glycole glycidyl ethers are preferable, preferably A² is in general formula (II) an alkylene with 2 carbon atoms.

The reactant according to formula (IV) can be for example hydroxy butyl vinylether, allylalcohol or methallylalcohol or it can be isoprenol. Said alcohols are alkoxylated in a polyaddition reaction with the acid OH function serving as the starter functionality for the polyaddition reaction. It is possible to use the polyaddition methods well known in the prior art, like the double metal cyanide (DMC) method or by alkaline catalysis.

In case of employing the DMC method, the preferable 50 to 1000 ppm double metal cyanide, as described in WO 00/14045 for example, with regard to the final product is supended in the starting alcohol and the mixture is degassed. Then the reaction mixture is pressurized with nitrogen and set to a temperature preferably between 80 and 120 °_{C} and alkylene oxide is added. After an induction period the reaction starts and progress of the reaction can be monitored by pressure and temperature of the reaction mixture. Once the reaction is finished, the DMC catalyst can be removed by a filtration step.

The polyaddition reaction may be done by using respective epoxides, preferably after activating a respective starter alcohol by suitable alkaline chemicals. Preferably used bases are KOH, KOCH₃, KO(t-Bu), KH, NaOH, NaO(t-Bu), NaOCH₃, NaH, Na, K, trimethyl amine, triethyl amine, tripropyl amine, tributyl amine, dimethyl ethanolamine, imidazole, 1-methylimidazole and/or 4-methylimidazole. Preferred amounts of base that are used are in the range between 0.1 to 10 weight.-% with regard to the weight of the polyether macromonomer product.

The polymerization comprises in the alkaline activation case preferably the following steps:
a) deprotonation of the alcohol with a base
b) optionally followed by a dewatering step and/or distillation of the alcohol, resulting from the base
c) addition of the monomers
d) agitation of the reaction mixture under an inert gas until pressure is constant
e) optionally neutralisation of the reaction product after complete polymerisation with acidic ion exchangers or acid, preferably phosphoric acid.

The preferred polymerisation temperature is between 50 to 260 °C, preferably between 80 and 220 °C.

The epoxides used as reactants comprise b) alkylene oxides A¹O with A¹ having the same meaning as in formula (I) and c) glycidyl ethers according to general formula (V). Said reactants can be added simultaneously to the unsaturated starter alcohol according to formula (IV) or in block form (first addition of a) and the addition of b) or vice versa).

It is preferably to implement the polyaddition reaction in a way that after activation of the respective unsaturated starter alcohol b) alkylene oxides A¹O, with A¹ having the same meaning as in formula (I), preferably with A¹ being an alkylene with 2 to 10 carbon atoms, and c) glycidyl ethers according to general formula (V) are added in consecutive steps. In this way it is possible that independently from the reactivities of the reactants b) and c) a defined molecular architecture of the macromonomer is achieved. The polyaddition is preferably carried out in that b) and c) are reacted in consecutive steps, which leads to a structure with multiple blocks of b) and c). Preferably the reaction is controlled in a way that after every addition step almost all of the reactant used is consumed by the polyaddition reaction (can be measured and controlled by the pressure in the system) before the other reactant is added in the next step.

Generally the products obtained in the alkoxylation step i) have a OH group at the end of the polyether macromonomer (R¹ = H).

The optional second process step ii) is an etherification reaction in which according to well known methods (Williamson ether synthesis, preferred by reaction with dialkyl sulfate, most preferred dimethyl sulfate) the obtained alcohol from the alkoxylation step is transformed to an alkoxy group.

Preferable is a method of manufacturing a polyether macromonomer in which in formula (I) U is CH₂=CR³-, w is 1, R³ is H or methyl, R¹ is a saturated hydrocarbon, preferably a C-1 to C-20 branched or linear alkyl group, most preferably methyl,
wherein in a polyaddition reaction in a first reaction step j) a
d) saturated alcohol R¹-(OA¹)ᵤOH, wherein u is an integer from 0 to 200, preferably 1 to 200, more preferably 5 to 150, most preferably 10 to 100, R¹ and A¹ have the same meaning as in general formula (I), is reacted with
b) x-u mols of one or more species of alkylene oxide A¹O with A¹ having the same meaning as in formula (I) and
c) one or more species of a glycidylether according to general formula (V) 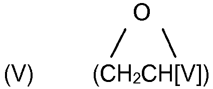
wherein in general formula (V) the parameter [V] has the same meaning as in formula (II)
and in a second reaction step jj) the resulting polyether alcohol from the first reaction step is esterified with an unsaturated acid U-COOH and/or its acid derivatives, preferably with (meth)acrylic acid and/or (meth)acrylic acid derivatives.

In this case the polyaddition reaction is started with the saturated alcohol and in a last step the unsaturated polymerizable group is introduced by an esterification step.

Preferably formula (I) is further defined as formula (Ia):

(la) U-(C=O)_{w}-O-(A¹O)₍ₓ₋ᵤ₎-(CH₂CH[V]O)_{y}-(A¹O)ᵤ-R¹.

with u being an integer from 1 to 200,
U is CH₂=CR³-, w is 1, R³ is H or methyl, R¹ is a saturated hydrocarbon, preferably a C-1 to C-20 branched or linear alkyl group, most preferably methyl and the parameter [V] has the same meaning as in formula (II). The parameters A¹, x and y in formula (Ia) have the same meaning as in formula (I). More preferably the parameter u in formula (la) is 5 to 150, most preferably 10 to 100.

If a saturated alcohol R¹-(OA¹)ᵤOH with u being an integer from 1 to 200 is used as the starting alcohol for the polymerization reaction, then formula (I) is preferably replaced by formula (Ia). It is apparent that in this case R¹ and (A¹O)ᵤ are bonded as -(A¹O)ᵤR¹, whereas the sequence of each of the repeating units (A¹O)₍ₓ₋ᵤ₎ and each of the repeating units (CH₂CH[V]O)_{y} in the polymer of formula (la) is not especially limited and can be for example in block form or statistical distribution.

Preferable examples of glycidylethers according to general formula (V) and alkylene oxides A¹O were mentioned already in the before standing text and are applicable in the same way.

The alcohol d) R¹-(OA¹)ᵤOH, wherein u is an integer from 0 to 200, R¹ and A¹ have the same meaning as in general formula (I), can be an alkoxylated chemical compound or not (if not u = 0). Preferable are for example methanol, ethanol, propan-1-ol, propan-2-ol, butan-1-ol, butan-2-ol, pentan-1-ol, hexan-1-ol, methoxyethanol, diethylene glycol monomethyl ether, triethylene glycol monomethyl ether, ethoxyethanol, diethylene glycol monoethyl ether, triethylene glycol monoethyl ether, propoxyethanol, diethylene glycol monopropyl ether, triethylene glycol monopropyl ether, butoxyethanol, diethylene glycol monobutyl ether, triethylene glycol monobutyl ether or mixtures thereof.

Acid derivatives of the unsaturated acid U-COOH are preferably its halogenides (U-CO-halogenide), more preferably U-CO-Cl and its anhydrides U-CO-O-CO-U. In an analogous way the halogenide and anhydride derivatives of (meth)acrylic acid are preferable. Also preferable are (meth)acrylic ester, for example (meth)acrylic methyl ester or (meth)acrylic ethyl ester, which are reacted with the OH-terminated polyether in a transesterification reaction to yield the described (meth)acrylic ester functionalized macromonomers.

The invention relates also to (co)polymers containing structural units being derived from the polyether macromonomers according to this invention, preferably the polyether macromonomer being incorporated into the (co)polymer by radical polymerization.

In the (co)polymers the polyether macromonomers according to general formula (I) are in most of the cases contained in multiple form. Therefore it is possible that the meaning of the parameters in general formula (I) can be independently different in the (co)polymer, especially it is possible that in the same (co)polymer different types of parameters U, w, A¹, A², x, y, z, [V], R¹ and R² are present, because different types of polyether macromonomers according to general formula (I) can be used. It is also possible that the same type of polyether macromonomers according to general formula (I) is used in the (co)polymers. As was mentioned in the before standing text A¹, [V], A² and R² can also differ in the same polyether macromonomer according to general formula (I).

The general formula (I) shows the units A¹O in the form of repeating units (A¹O)ₓ and the units CH₂CH[V]O in the form of repeating units (CH₂CH[V]O)_{y}, each being characterized by the the respective number of repeating units x and y. This is a general representation of said repeating units, as generally used in the technical field of polymer chemistry. The chosen way of formula representation does not limit in any way the sequence of said repeating units. As was stated before in this description, any sequence of the two repeating units A¹O and CH₂CH[V]O can be present in the polymer of formula (I), like for example a statistical distribution or said repeating units can be in block form. In detail the formula (I) does not imply that (A¹O)ₓ has to be bonded to U-(C=O)_{w}-O- and it does not imply that (CH₂CH[V]O)_{y}has to be bonded to R¹. Said chemical bonding mentioned in the before standing sentence can be implemented, but formula (I) is not limited to said chemical bonding.

Preferably in the (co)polymers the mol percentage of polyether macromonomers according to general formula (I) is higher than 10 mol %, more preferably higher than 30 mol %, with respect to the sum of all structural units derived from monomers incorporated into the (co)polymer. Preferably the upper limit of polyether macromonomers according to general formula (I) is 70 mol %, more preferably 60 mol %. For example it is possible to copolymerize the following monomers with the polyether macromonomers according to this invention: acrylic acid, maleic anhydride, methacrylic acid, vinyl phosphonic acid, hydroxyethyl (meth)acrylate phosphoric acid mono ester, hydroxypropyl(meth)acrylate phosphoric acid mono ester, vinyl phosphate, vinyl sulfonic acid and vinyl sulfate.

Preferable monomers for copolymerizing the polyether macromonomers according to this invention to the copolymers according to this invention are monocarboxylic acids, dicarboxylic acids and monomers comprising phosphoric acid ester units, preferably phosphoric acid mono ester units. Hydroxyethyl(meth)acrylate phosphoric acid ester (HE(M)A - phosphate) can be used in its pure form or it can be used in a mixture with side products from the phosphorylation reaction of hydroxyethyl(meth)acrylate. For example it is possible that bis(hydroxyethyl methacrylate) phosphoric acid diester or bis(hydroxypropyl methacrylate) phosphoric acid diester is formed during the phosphorylation reaction when producing the monomer.

Preferable are (co)polymers containing acid structural units, preferably carboxylic acid structural units, wherein preferably the (co)polymer is obtained by radical polymerization of acid monomers, preferably carboxylic acid monomers, and the polyether macromonomers according to this invention. The term acid structural units means structural units with acid functions as well as salt forms of the acid functions. The salts are not especially limited. Examples for acid structural units are sulphonic acids, phosphoric acid esters, phosphonic acids, carboxylic acids and/or carboxylic acid anhydrides, in each case the salt forms of the acids are comprised. Preferably the acid structural units in the (co)polymers do not contain polyether units.

Preferable are (co)polymers, wherein the acid structural unit is produced in the copolymer by incorporation of the acid monomer in the form of polymerized units, which structural unit is in accordance with one of the general formulae (VIa), (VIb), (Vlc) and/or (VId) 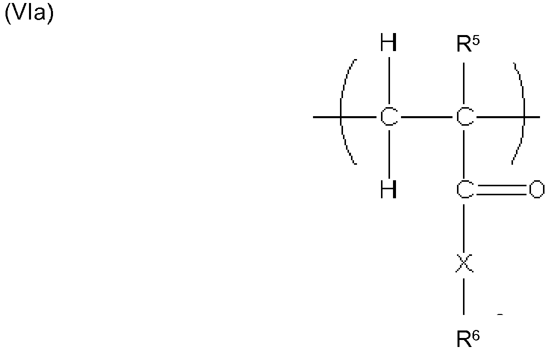 where
R⁵ are identical or different and are represented by H and/or a non-branched chain or branched C₁ - C₄ alkyl group;
X are identical or different and are represented by NH-(CₙH₂ₙ) where n = 1, 2, 3 or 4 and/or O-(CₙH₂ₙ) where n = 1, 2, 3 or 4 and/or by a unit not present;
R⁶ are identical or different and are represented by OM, SO₃M, PO₃M₂, O-PO₃M₂ and/or para-substituted C₆H₄-SO₃M, with the proviso that, if X is a unit not present, R⁶ is represented by OM;
M is independently from each other H, an ammonium ion, alkali cation or any other cation with the proviso that the mol number of the cation is divided with its number of cationic charges, preferably the cation is ½ earth alkali cation or an alkali cation, 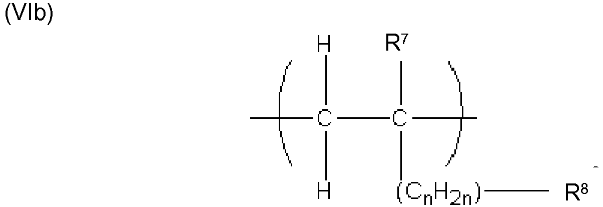
where
R⁷ are identical or different and are represented by H and/or a non-branched chain or a branched C₁ - C₄ alkyl group;
n = 0, 1, 2, 3 or 4;
R⁸ are identical or different and are represented by SO₃M, PO₃M₂, O-PO₃M₂ and/or para-substituted C₆H₄-SO₃M, M has the before mentioned meaning; 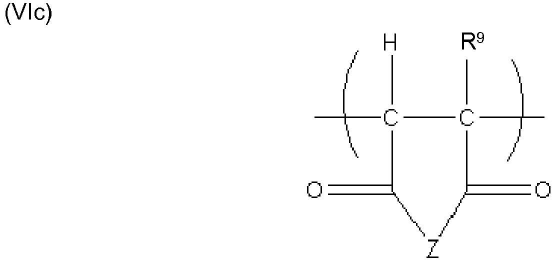
where
R⁹ are identical or different and are represented by H and/or a non-branched chain or a branched C₁ - C₄ alkyl group;
Z are identical or different and are represented by O and/or NH; 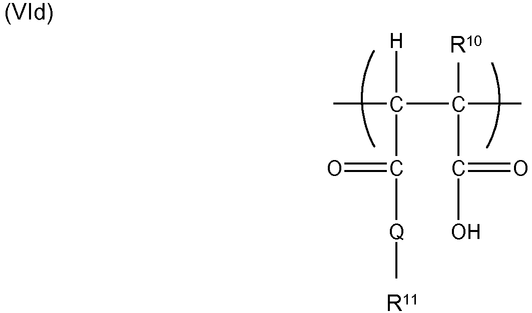
where
R¹⁰ are identical or different and are represented by H and/or a non-branched chain or branched C₁ - C₄ alkyl group;
Q are identical or different and are represented by NH and/or O;
R¹¹ are identical or different and are represented by H, (CₙH₂ₙ)-SO₃M where n = 0, 1, 2, 3 or 4, (CₙH₂ₙ)-OH where n = 0, 1, 2, 3 or 4; (CₙH₂ₙ)-PO₃M₂ where n = 0, 1, 2, 3 or 4, (CₙH₂ₙ)-OPO₃M₂ where n= 0, 1, 2, 3 or 4, (C₆H₄)-SO₃M, (C₆H₄)-PO₃M₂, (C₆H₄)-OPO₃M₂ and/or (CₘH₂ₘ)ₑ-O-(A'O)_{α} -R¹² where m = 0, 1, 2, 3 or 4, e = 0, 1, 2, 3 or 4, A' = C_{x'}H_{2x'} where x' = 2, 3, 4 or 5 and/or CH₂C(C₆H₅)H-, α= an integer from 1 to 350 where R¹² are identical or different and are represented by a non-branched chain or a branched C₁ - C₄ alkyl group, M has the before mentioned meaning.

The acid monomer according to formula (VIa) can be for example (meth)acrylic acid and its salts, hydroxyethyl(meth)acrylate phosphoric acid ester and its salts, hydroxypropyl(meth)acrylate phosphoric acid ester and its salts.

The acid monomer according to formula (VIb) can be for example vinyl sulphonic acid and its salts, vinyl phosphonic acid and its salts and para-styrene sulphonic acid and its salts.

Preferable are (co)polymers, wherein the acid structural unit is derived from carboxylic acid monomers selected from the group of (meth)acrylic acid, maleic acid and/or maleic anhydride.

The invention also concerns a method of use of (co)polymers as a dispersant for aqueous mixtures of inorganic particles, preferably for inorganic binders selected from the group of (Portland) cement, α -calciumsulfate-hemihydrat, β-calciumsulfate-hemihydrate, calciumsulfate in the form of anhydrite, lime, furnace slag, fly ash, silica fume, natural puzzolane and/or calcined oil shale, preferably (Portland) cement is contained with a weight percentage higher than 40 % with respect to the sum of the inorganic binders.

The dosage of the (co)polymers according to this invention is preferably between 0.25 and 0.40 weight % based on the solids content of the (co)polymer with respect to the weight of (Portland) cement. The water / cement ratio (W/C ratio) of the concrete or mortar prepared with the copolymers according to this invention is preferably between 0.4 and 0.8, more preferably 0.4 and 0.6.

The invention also concerns a method of use of the (co)polymers according to this invention as a means for the reduction of the viscosity of aqueous mixtures of inorganic particles, preferably for inorganic binders selected from the group of (Portland) cement, α -calciumsulfate-hemihydrat, β-calciumsulfate-hemihydrate, calciumsulfate in the form of anhydrite, lime, furnace slag, fly ash, silica fume, natural puzzolane and/or calcined oil shale, preferably (Portland) cement is contained with a weight percentage higher than 40 % with respect to the sum of the inorganic binders.

The invention concerns a method of use of (co)polymers according to this invention as a grinding aid for the production of (Portland) cement, preferably in the grinding of the clinker or clinker blend to give the cement.

A clinker blend is preferably understood to mean a mixture of clinker and substitutes such as slag, fly ash and/or pozzolans. These grinding aid compositions are used in amounts of 0.001 % by weight to 5% by weight, preferably in amounts of 0.01 % by weight to 0.5% by weight, based in each case on the clinker or clinker blend to be ground. It is possible to use the inventive compositions as grinding aids in ball mills or else in vertical mills. The inventive compositions can be used as a grinding aid alone or else in combination with other grinding aids, for example mono-, di-, tri- and polyglycols, polyalcohols (for example glycerol of varying purities, for example from biodiesel production), amino alcohols (e.g. MEA, DEA, TEA, TIPA, THEED, DIHEIPA), organic acids and/or salts thereof (e.g. acetic acid and/or salts thereof, formates, gluconates), amino acids, sugars and residues from sugar production (e.g. molasses, vinasses), inorganic salts (chlorides, fluorides, nitrates, sulphates) and/or organic polymers (e.g. polyether carboxylates (PCEs)). It has been found that especially the early strengths of the cement thus produced can be improved.

The invention concerns building material mixtures containing a (co)polymer according to this invention and inorganic binders selected from the group of (Portland) cement, α -calciumsulfate-hemihydrat, β-calciumsulfate-hemihydrate, calciumsulfate in the form of anhydrite, lime, furnace slag, fly ash, silica fume, natural puzzolane and/or calcined oil shale, preferably (Portland) cement is contained with a weight percentage higher than 40 % with respect to the sum of the inorganic binders, optionally water is contained. Preferred building material mixtures are water reducer compositions for concrete or mortar, for reinforcing mortars, grouting mortars and self-levelling formulations as used for flooring applications.

Preferably the (co)polymer according to this invention is in dry form, preferably with a water content of less than 5 weight %. More preferably the (co)polymer according to this invention is in powder form. It is known that a too high water content in the building material mixture would cause an unwanted premature hydration reaction of the binder, especially of (Portland) cement with the water.

### Examples

### 1. Examples for the production of the polyether macromonomers

The polyether macromonomers according to formula (I) were produced according to two different production processes, which are explained in the following by general prescriptions and respective tables showing the details.

### Method 1 (w = 0 in the polyether macromonomer indicated by general formula (I) and formula (IV)):

The unsaturated starting alcohol (please compare table 1) and 0.1 weight % to 1 weight % with respect to the weight of the polyether macromonomer (product) of the base potassium methoxide, is placed in a reaction vessel and stirred at 90°C at a pressure of 20 mbar for 120 minutes. Eventually liberated water or alcohol from reaction of the base with the unsaturated alcohol is being distilled off by this procedure. The vacuum is released by addition of nitrogen. In case of unsaturated alcohols with a low boiling point, the loss of unsaturated alcohol by the vacuum procedure is determined by weighing and is substituted.

The reaction mixture is transferred into a dry reaction pressure vessel, rendered inert with nitrogene at a pressure of 3.5 bar and heated under stirring to 120°C. After this procedure ethylene oxide and the respective glycidyl ethers as described in general formula (V) are added. The details of the consecutive addition steps are summarized in the table 1. The progress of the reaction is followed by monitoring the pressure and the heat evolvement curve. The complete reaction of an added monomer is ensured by the pressure and heat evolvement curve. The consecutive monomer (next portion of monomer, which is different to the before added one) is added, when the pressure has dropped down to the original magnitude before monomer addition and no further heat evolvement can be detected.

After completion of the reaction, the mixture is cooled down to 80°C and purged for 30 minutes with nitrogene. The yield of the reaction is quantitatively. Table 1 gives the details of the polyaddition reaction with the kind of reactants, their amount and the sequence of addition steps. For clarification, also temptative structures are given for each macromonomer.

**Table 1 showing the sequential addition of monomers for macromonomers 100, 200, 300, 400 and 500:**

| Step | Macro-monomer | 100 | 200 | 300 | 400 | 500 |
|---|---|---|---|---|---|---|
| 1 | starting alcohol hydroxyl butyl vinyl ether (1 mol in each case) | 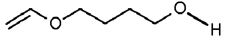 | | | | |
| 2 | ethylene oxide [mol] | 10 | 10 | 10 | 10 | 10 |
| 3 | diethylene glycol methyl glycidyl ether [mol] | 0 | 1 | 0 | 0 | 1 |
| 4 | triethylene glycol methyl glycidyl ether [mol] | 0 | 0 | 1 | 1 | 0 |
| 5 | heptaethylene glycol methyl glycidyl ether [mol] | 2 | 0 | 0 | 0 | 0 |
| 6 | ethylene oxide [mol] | 17 | 20 | 20 | 10 | 5 |
| 7 | heptaethylene glycol methyl glycidyl ether [mol] | 2 | 0 | 0 | 0 | 0 |
| 8 | diethylene glycol methyl glycidyl ether [mol] | 0 | 1 | 0 | 0 | 1 |
| 9 | triethylene glycol methyl glycidyl ether [mol] | 0 | 0 | 1 | 1 | 0 |
| 10 | ethylene oxide [mol] | 0 | 20 | 20 | 10 | 5 |
| 11 | diethylene glycol methyl glycidyl ether [mol] | 0 | 1 | 0 | 0 | 1 |
| 12 | triethylene glycol methyl glycidyl ether [mol] | 0 | 0 | 1 | 1 | 0 |
| 13 | ethylene oxide [mol] | 0 | 20 | 20 | 10 | 5 |
| 14 | diethylene glycol methyl glycidyl ether [mol] | 0 | 1 | 0 | 0 | 1 |
| 15 | triethylene glycol methyl glycidyl ether [mol] | 0 | 0 | 1 | 1 | 0 |
| 16 | ethylene oxide [mol] | 0 | 20 | 20 | 10 | 5 |
| 17 | diethylene glycol methyl glycidyl ether [mol] | 0 | 0 | 0 | 0 | 1 |
| 18 | ethylene oxide [mol] | 0 | 0 | 0 | 0 | 5 |
| 19 | diethylene glycol methyl | 0 | 0 | 0 | 0 | 1 |
| | glycidyl ether [mol] | | | | | |
| 20 | ethylene oxide [mol] | 0 | 0 | 0 | 0 | 5 |
| 21 | diethylene glycol methyl glycidyl ether [mol] | 0 | 0 | 0 | 0 | 1 |
| 22 | ethylene oxide [mol] | 0 | 0 | 0 | 0 | 5 |
| 23 | diethylene glycol methyl glycidyl ether [mol] | 0 | 0 | 0 | 0 | 1 |
| 24 | ethylene oxide [mol] | 0 | 0 | 0 | 0 | 5 |

**Table 1 (continued) showing the sequential addition of monomers for macromonomers 600, 900, 1000, 700 and 800:**

| Step | Macro-monomer | 600 | 900 | 1000 | 700 | 800 |
|---|---|---|---|---|---|---|
| 1 | starting alcohol (1 mol) | 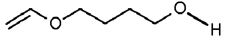 | | | CHVE* | isoprenole** |
| 2 | ethylene oxide [mol] | 40 | 40 | 40 | 40 | 40 |
| 3 | diethylene glycol methyl glycidyl ether [mol] | 4 | 4 | 0 | 4 | 4 |
| 4 | triethylene glycol methyl glycidyl ether [mol] | 0 | 0 | 4 | 0 | 0 |
| 5 | ethylene oxide [mol] | 5 | 5 | 5 | 5 | 5 |
| 6 | diethylene glycol methyl glycidyl ether [mol] | 4 | 0 | 4 | 4 | 4 |
| 7 | triethylene glycol methyl glycidyl ether [mol] | 0 | 4 | 0 | 0 | 0 |
| 8 | ethylene oxide [mol] | 5 | 5 | 5 | 5 | 5 |

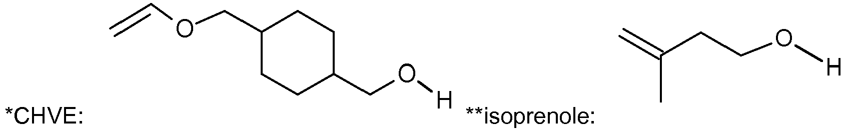

Prepared polyether macromonomers according to method 1:
Polyether macromonomer 100 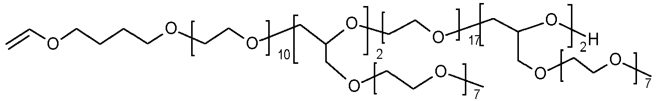
Polyether macromonomer 200 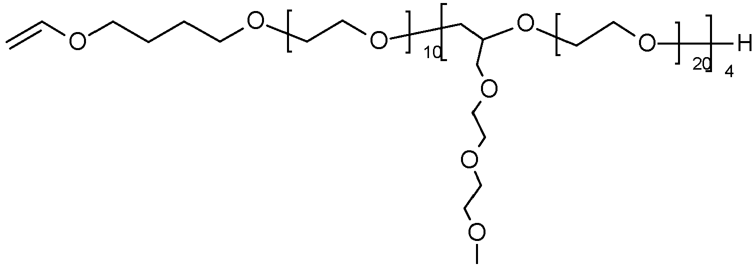
Polyether macromonomer 300 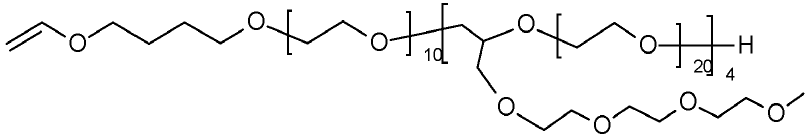
Polyether macromonomer 400 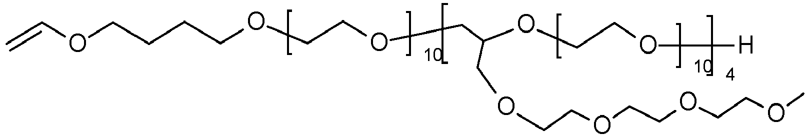
Polyether macromonomer 500 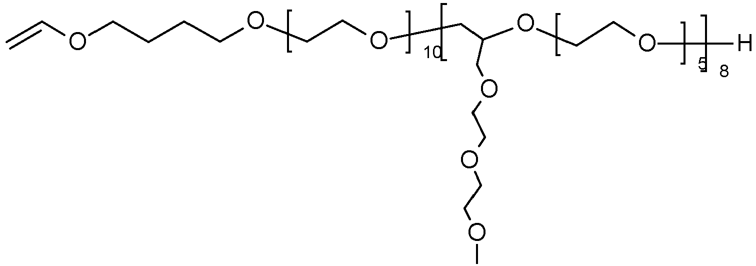
Polyether macromonomer 600 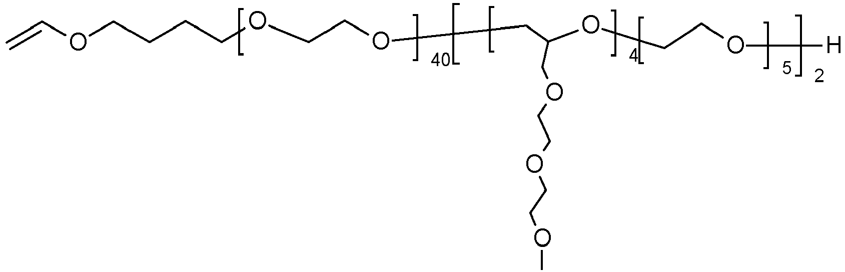
Polyether macromonomer 700 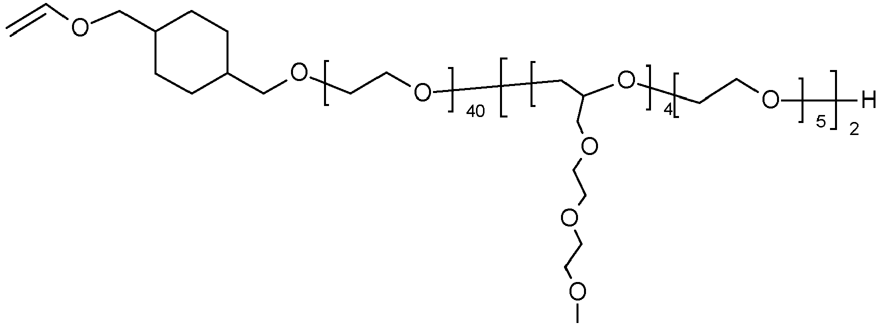
Polyether macromonomer 800 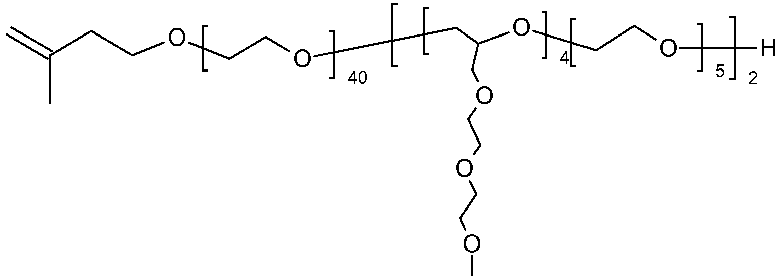
Polyether macromonomer 900 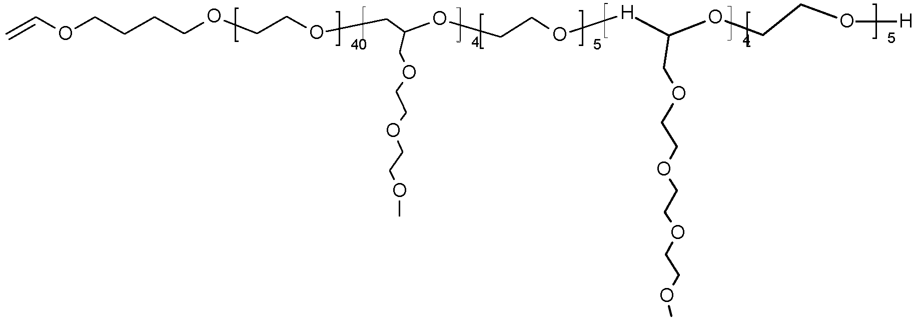
Polyether macromonomer 1000

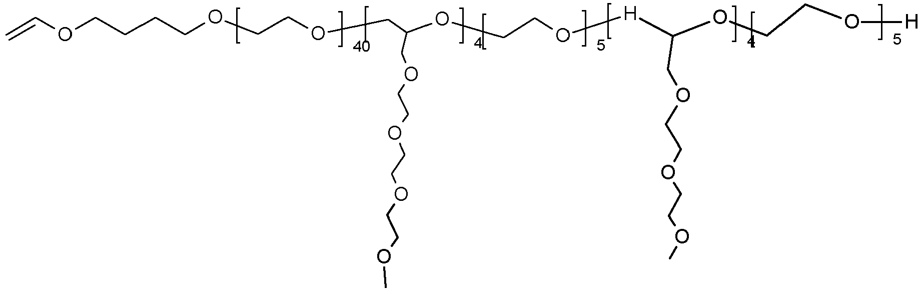

### Method 2 (w = 1 in the polyether macromonomer indicated by general formula (I) and formula (IV)):

The saturated starting alcohol (please compare table 2) and 0.1 weight % to 1 weight % with respect to the weight of the polyether macromonomer (product) of the base potassium methoxide is placed in a reaction vessel and stirred at 90°C at a pressure of 20 mbar for 120 minutes. Eventually liberated water or alcohol from reaction of the base with the alcohol is being distilled off by this procedure. The vacuum is released by addition of nitrogen. In case of alcohols with a low boiling point, the loss of alcohol by the vacuum procedure is determined by weighing and substituted. The reaction mixture is transferred into a dry reaction pressure vessel, rendered inert with nitrogen at a pressure of 3.5 bar and heated under stirring to 120 °C. After this procedure ethylene oxide and the respective glycidylethers as described in general formula (V) are added. The details of the consecutive addition steps are summarized in the table 2. The progress of the reaction is followed by monitoring the pressure and the heat evolvement curve in order to determine the appropriate addition times as described in the before standing text. Table 2 gives the details of the polyaddition reaction with the kind of reactants, their amount and the sequence of addition steps

After completion of the reaction, the mixture is cooled down to 80°C and purged for 30 minutes with nitrogen. Then 3 weight % of an acidic ion exchanger is added and the mixture is stirred at 100° C for 120 minutes and finally hot filtrated under nitrogene pressure.

For the esterification (second step after the polyaddition), the described polyetherol is dissolved in cyclohexane and the resulting approximately 60 weight % mixture is placed in a flask, equipped with anchor stirrer, air inlet and Dean-Stark trap. 400 ppm methyl hydroquinone , 3000 ppm aqueous 5 % copper (II) acetate solution and 2.200 ppm aqueous 65 % para-toluene sulfonic acid solution are added.

Air is let into the reaction mixture at a rate of 1.5 l/h and a slight excess of acrylic acid is added. The reaction mixture is heated up under stirring and at a temperature of approx. 85°C the mixture starts boiling. The resulting reaction water from the esterification is removed from the mixture by a Dean-Stark trap. The temperature of the reaction mixture raises up to 107 °C. After 6 hours the reaction is completed and cyclohexane as well as the excess of acrylic acid is distilled off under vacuum. For clarification, also temptative structures are given for each macromonomer.

**Table 2 showing the sequential addition of monomers for the macromonomers 1100 and 1200:**

| Step | Macromonomer | 1100 | 1200 |
|---|---|---|---|
| 1 | starting alcohol (1 mol) | 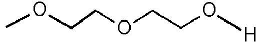 | |
| 2 | ethylene oxide [mol] | 8 | 8 |
| 3 | diethylene glycol methyl glycidyl ether [mol] | 8 | 8 |
| 5 | ethylene oxide [mol] | 20 | 40 |

| followed by an esterification with | | | |
|---|---|---|---|
| 6 | acrylic acid (mol) | 1 | 1 |

Prepared polyether macromonomers according to method 2:
Polyether macromonomer 1100 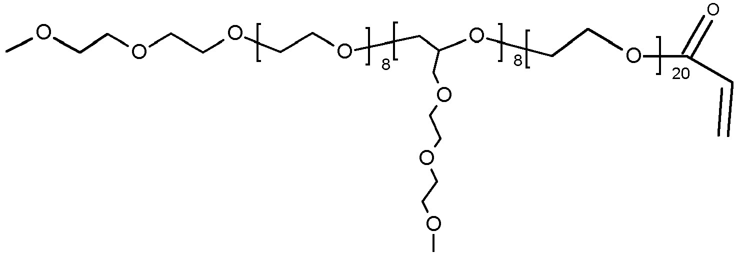
Polyether macromonomer 1200

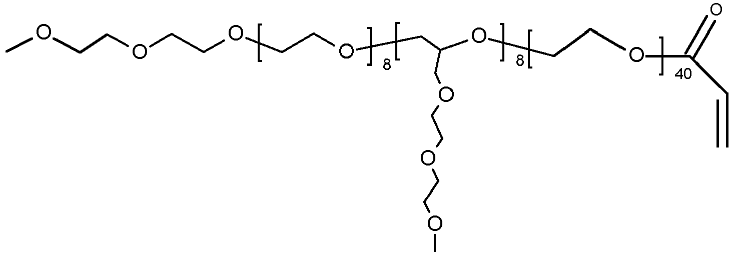

The obtained polyether macromonomers were analytically investigated. Table 3 summarizes the analytical results.

**Table 3: Analytical results of polyether macromonomers**

| Polyether Macromonomer | Molecular weight Mw* [g/mol] | Polydispersity | Diol content [%] | Method of preparation |
|---|---|---|---|---|
| 100 | 7830 | 3,6 | | 1 |
| 200 | 7350 | 1,2 | 0,8 | 1 |
| 300 | 6200 | 1,3 | 1,6 | 1 |
| 400 | 3720 | 1,3 | 2,4 | 1 |
| 500 | 5760 | 1,2 | < 0,5 | 1 |
| 600 | 6980 | 1,2 | < 0,5 | 1 |
| 700 | 4200 | 1,3 | < 0,1 | 1 |
| 800 | 8240 | 1,3 | < 0,1 | 1 |
| 900 | 8510 | 1,3 | < 0,5 | 1 |
| 1000 | 8730 | 1,2 | < 0,5 | 1 |
| 1100 | 4950** | 1,3** | | 2 |
| 1200 | 6170** | 1,3** | | 2 |

| | | | | |
|---|---|---|---|---|
| * standard: polystyrene, eluent: THF ** numbers before esterification reaction | | | | |

### 2. Copolymerization examples using the polyether macromonomers

The polyether macromonomers according to formula (I) were produced according to the following general instruction:
Copolymerization method 1:
   A glass vessel, equipped with stirrer, pH-electrode and several pumps was charged with 1 equivalent (0.25 mol) of macromonomer and 40 g of deionized water. The solution was cooled down to 15 °C.
   In a separate tank, the desired amount of acrylic acid was dissolved in 15 g of deionized water (Solution A). In parallel, a 6 weight % solution of Brüggolit®E 01 was prepared (Solution B). Under cooling and stirring 0.68 g of 3-Mercaptopropionic acid, 0.012 g Fe₂(SO₄)₃ and 0,64 g of a 30 % H₂O₂ solution were added to the vessel.
   At the same time, addition of solution A and B was started. Solution A was added within 45 min. Solution B was added with 24 ml/h until the solution was peroxide-free. After that, the product mixture was neutralized with aqueous NaOH solution and diluted with water to receive a solid content of 30 %.
Copolymerization method 2:
   A glass vessel, equipped with stirrer, pH-electrode and several pumps was charged with 1 equivalent (0.1 mol) of macromonomer and 85 g of deionized water. The solution was cooled down to 15 °C.

In a separate tank, the desired amount of maleic anhydride was dissolved in deionized water to get a 30 % solution. To this solution, 1.13 g of 3-mercaptopropionic acid was added (Solution A). 60 % of the solution A (containing maleic anhydride and 3-mercaptopropionic acid) was directly added to the vessel. In parallel, 2.5 g of Rongalit® was dissolved in 47.5 g of deionized water (Solution B). Under cooling and stirring 0.031 g Fe₂(SO₄)₃ and 1.87 g 30 % H₂O₂ solution were added to the vessel.

The remaining part of solution A was now feeded into the vessel within 15 minutes. At the same time as the starting of the feeding of solution A, solution B was started to be feeded into the vessel at a rate of 3.1 ml/h. The addition of the solution B was continued until the reaction mixture in the vessel was peroxide free.

After that, the product mixture was neutralized with aqueous NaOH solution and diluted with water to obtain a solid content of 30 %.

The results with the details of the (co)polymers are summarized in the following table 2.

**Table 4: Details of (co)polymers**

| Copolymer no. | Polyether macromonomer (normalized to 1 mol) | Acrylic acid (mol) | Maleic anhydride (mol) | Mw [g/mol] | Copolymerization method |
|---|---|---|---|---|---|
| 1 | 200 | 5 | - | 41000 | 1 |
| 2 | 200 | 3 | - | 61000 | 1 |
| 3 | 200 | 7 | - | 45000 | 1 |
| 4 | 400 | 3 | | 31000 | 1 |
| 5 | 100 | - | 1.185 | 18000 | 2 |
| 6 | 100 | - | 1.6 | 21000 | 2 |
| 7 | 300 | 3 | | 58000 | 1 |
| 8 | 400 | 3 | - | 57000 | 1 |
| 9 | 500 | 3 | - | 49000 | 1 |
| 10 | 600 | 3 | - | 53000 | 1 |

### 4. Concrete test results

### Concrete Rheometer Test

Plastic viscosities of concrete were determined using an ICAR-Rheometer (Reference: E.P. Koehler, D.W. Fowler (2007). " ICAR Mixture Proportioning Procedure for SCC" International Center for Aggregates Research, Austin, TX.).

Vibrated concrete and self compacting concrete were tested.

The mix design of traditional vibrated concrete is the following:

| | |
|---|---|
| Sand 0-4 | 1050 Kg/m3 |
| Gravel 8-12 | 770 Kg/m3 |

| | |
|---|---|
| Cement type I 52.5 | 400 kg/m3 |
| Water | 180 Kg/m3 |

To receive comparable results, the amount of plasticizer was adjusted to have similar slump values (23 cm ± 1 cm) after 5 min (according to DIN EN 12350).

The table below reports the results of the tests that were carried out with the ICAR rheometer. All polymers are 30% water solutions, formulated with 1 % of a silicon-based defoamer in order to adjust the amount of air entrained into the concrete.

**Table 5: Details of concrete rheometer tests (vibrated concrete)**

| Copolymer | Dosage [weight % on cement] (based on solid content of the copolymer) | Air (%) | Slump (cm) Slump flow (cm) | | Plastic viscosity µ (Pa*s) | Compressive Strength (MPa) | | |
|---|---|---|---|---|---|---|---|---|
| | | | 5 min | 30 min | | 24h | 7 d | 28 d |
| Glenium ACE® 440 (comparison) | 0.26 | 2.0 | 24 | 12 | 195 | - | - | - |
| | | | 47 | | | | | |
| 2 | 0.38 | 2.3 | 23.5 | 17 | 189 | - | - | - |
| | | | 48 | | | | | |
| 4 | 0.34 | 2.5 | 23 | 18 | 96 | - | - | - |
| | | | 47 | | | | | |
| 7 | 0.38 | 2.1 | 23 | 13 | 127 | - | - | - |
| | | | 46 | | | | | |
| Glenium ACE® 440 * (comparison) | 0.27 | 2.6 | 22.5 | 11 | 280 | 51.0 | 62.7 | 65.3 |
| | | | 40 | | | | | |
| 8 | 0.27 | 2.8 | 22 | 9 | 214 | 48.6 | 63.2 | 65.6 |
| | | | 33 | | | | | |
| 9 | 0.29 | 2.6 | 22 | 4 | 275 | 52.7 | 59.3 | 66.4 |
| | | | 38 | | | | | |
| 10 | 0.33 | 2.7 | 23 | - | 170 | 52.7 | 55.4 | 63.9 |
| | | | 43 | | | | | |

| | | | | | | | | |
|---|---|---|---|---|---|---|---|---|
| * Glenium ACE 440 is a polycarboxylate ether (PCE) obtainable from BASF Construction Chemicals Italia Spa. | | | | | | | | |

The concrete results show that for the first test series (Glenium® ACE 440, Copolymers 2, 4 and 7) a higher dosage was needed for obtaining the same slump and slump flow. However it was possible to obtain significantly lower viscosities of the concrete compared to the reference Glenium® ACE 440. This is a major advantage for applications where low viscosities are demanded.

In the case of the second test series (Glenium® ACE 440, Copolymers 8, 9 and 10) the dosages are similar. It was also possible to decrease the viscosity of the concrete in most cases significantly. For the compressive strength evaluation, cubes of concrete were prepared and then cured in controlled conditions. The compressive strength data were then measured at specific times. Reference standards for cubes preparation and strength measurement were EN 12390-2 and EN 12390-3. The data show that it was possible to obtain low viscosities of the concrete without loss of compressive strength.

### Self compacting Concrete

The mix design of self compacting concrete is the following:

| | |
|---|---|
| Sand 0-4 | 770 kg/m³ |
| Crushed 6-12 | 880 kg/m³ |
| Cement type I 52.5 | 370 kg/m³ |
| Limestone filler | 130 kg/m³ |
| Water | 160 l/m³ |

The slump flow is 60 ± 10 cm, according to EN 12350-8.

The table 6 below reports the results of the tests that were carried out with the ICAR rheometer. All polymers are 30% water solutions, formulated with 0.6 % of tributyl phosphate as defoamer in order to adjust the amount of air entrained into the concrete.

**Table 6: Details of concrete rheometer tests (self compacting concrete)**

| Copolymer | Dosage [weight % on cement] (based on solid content of the copolymer) | Air (%) | slump flow (cm) | | Plastic viscosity µ (Pa*s) |
|---|---|---|---|---|---|
| | | | 5 minutes | 20 minutes | |
| Glenium® ACE 440 (comparison) | 0.81% | 2.2 | 53 | n.m. | 268 |
| 8 | 1.00% | 2.8 | 49 | n.m. | 221 |
| Glenium® ACE 440 (comparison) | 0.97% | 2.2 | 65 | 55 | 226 |
| 9 | 1.20% | 1.3 | 67 | 48 | 151 |
| 10 | 1.20% | 1.3 | 67 | 48 | 130 |

For the self compacting concrete it was found that copolymer 8 showed a strongly reduced viscosity at only slightly higher dosage compared to Glenium® ACE 440.

The second test series shows also a strong decrease of the plastic viscosity for copolymers 8 and 9, whereas the viscosity of the comparison Glenium® ACE 440 is higher. Slightly higher dosages of the copolymers according to this invention are needed compared to the comparison examples.

The concrete results show that it is possible to obtain concretes with a significantly reduced viscosity by use of the copolymers according to this invention.

## Claims

1. Polyether macromonomer according to general formula (I)
(I) U-(C=O)_{w}-O-(A¹O)ₓ-(CH₂CH[V]O)_{y}-R¹,
wherein in general formula (I)
U is an unsaturated structural unit with 2 to 10 carbon atoms, which comprises one polymerizable carbon - carbon double bond,
w is 0 or 1, with the condition that w is 0 if U is different from CH₂=CH- and CH₂=C(Me)-,
A¹ is the same or different and is independently from each other a branched or linear alkylene with 2 to 10 carbon atoms, -CH₂-CH(phenyl)-, -CH₂-CH(CH₂-COOR⁴)- and/or
-CH₂-CH(CH₂-N⁺(C-1 to C-1 0 alkyl)₃ X⁻ - with the proviso that the mol percentage of -CH₂-CH(CH₂-COOR⁴)- and -CH₂-CH(CH₂-N⁺( C-1 to C-10 alkyl)₃X⁻- is in each case less than 30 mol % with respect to all units A¹,
R⁴ is is the same or different and is independently from each other a C-1 to C-1 0 linear or branched alkyl group, H or a cation, preferably an (earth) alkali metal, X- is an anion, preferably X- is a halogenide,
x is an integer from 10 to 300,
y is an integer from 1 to 50,
R¹ is H or a saturated hydrocarbon, preferably H and/or a C-1 to C-20 branched or linear alkyl group, most preferably H and/or a methyl group,
[V] is represented by the general formula (II)
(II) -CH₂-O-(A²O)_{z}-R²,
wherein in general formula (II)
A² is the same or different and is independently from each other a branched or linear alkylene with 2 to 10 carbon atoms, preferably 2 carbon atoms, -CH₂-CH(phenyl)-, with the proviso that the mol percentage of -CH₂-CH(phenyl)-, is less than 30 mol % with respect to all units A²,
z is the same or different and is independently from each other an integer between 1 and 50,
R² is the same or different and is independently from each other a saturated hydrocarbon or hydrogen, preferably a C-1 to C-20 branched or linear alkyl group, most preferably a methyl group.

2. Polyether macromonomer according to claim 1, wherein U is a) selected from alkenyl groups with 2 to 5 carbon atoms, with w is 0 or b) U is selected from CH₂=C(R³)-, in which case in general formula (I) w is 1 and R³ is H or methyl, preferably R¹ in general formula (I) is a saturated hydrocarbon, more preferably a C-1 to C-20 branched or linear alkyl group, most preferably a methyl group, or U is c) a vinyl ether according to formula (III) with w is 0:

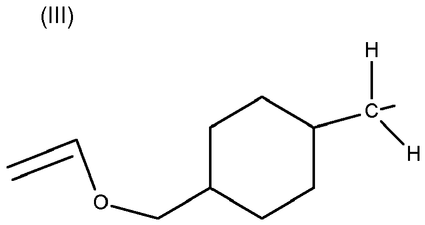

3. Polyether macromonomer according to claim 1, wherein w is 0 and U is an alkenyl group with 2 to 5 carbon atoms and is selected from CH₂=CH-, CH₂=CR³-CH₂- or CH₂=C(CH₃)-(CH₂)₂-,
wherein R³ is H or methyl.

4. Polyether macromonomer according to any of claims 1 to 3, wherein in general formula (I)
x is an integer from 20 to 150,
y is an integer from 1 to 30 and
the mol percentage of C-2 alkylene in A¹ is higher than 80 mol % with respect to all alkylenes A¹,
and in general formula (II)
the mol percentage of C-2 alkylene in A² is higher than 80 mol % with respect to all alkylenes A² and
z is the same or different and is independently from each other an integer between 1 and 10.

5. Polyether macromonomer according to claim 4, wherein in general formula (I)
x is an integer from 20 to 100,
y is an integer from 3 to 10 and
the mol percentage of C-2 alkylene in A¹ is higher than 90 mol % with respect to all alkylenes A¹,
and in general formula (II)
the mol percentage of C-2 alkylene in A² is higher than 90 mol % with respect to all alkylenes A² and
z is an integer between 1 and 5.

6. Polyether macromonomer according to any of claims 1, 2, 4 or 5, wherein U is CH₂=CR³-, w is 1, R³ is H or methyl, R¹ is a saturated hydrocarbon, preferably a C-1 to C-20 branched or linear alkyl group, most preferably methyl.

7. Polyether macromonomer according to any of claims 1 to 6, wherein the mol percentage of -CH₂-CH(CH₂-COOR⁴)- or -CH₂-CH(CH₂-N+(C-1 to C-1 0 alkyl)₃X⁻- is from 0.5 mol % to 5 mol % with respect to all units A¹.

8. Polyether macromonomer according to any of claims 1 to 7, wherein a branching factor is defined as the quotient of index y and index x (y/x) in general formula (I) and the value of the branching factor is from 0.01 to 0.8, preferably 0.05 to 0.2.

9. Polyether macromonomer according to any of claims 1 to 8, wherein in general formula (I) the alkylene oxide units A¹O and units CH₂CH[V]O are contained in a statistical distribution, in block form or in form of a gradient copolymer.

10. Method of manufacturing of a polyether macromonomer according to any of claims 1 to 5 and according to general formula (I), wherein in a polyaddition reaction in a
first process step
i) an a) unsaturated alcohol of the general formula
(IV) U-(C=O)_{w}-OH,
wherein in general formula (IV)
U has the same meaning as in formula (I),
w is 0 in general formula (IV) and in general formula (I),
is reacted with
b) one or more than one species of an alkylene oxide A¹O with A¹ having the same meaning as in formula (I) and
c) one or more than one species of a glycidylether according to general formula (V) 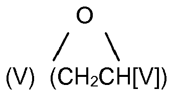
in general formula (V) the parameter [V] has the same meaning as in formula (II), to result in a polyether macromonomer alcohol of formula (I) with R¹ being H, and optionally followed by a
second process step ii), which is an etherification of the hydroxy group of the polyether macromonomer alcohol of formula (I), replacing H by a saturated hydrocarbon, preferably a C-1 to C-20 branched or linear alkyl group, most preferably a methyl group.

11. Method of manufacturing a polyether macromonomer according to claim 6, wherein in a polyaddition reaction in a first reaction step j) a d) saturated alcohol R¹-(OA¹)ᵤOH, wherein u is an integer from 0 to 200, R¹ and A¹ have the same meaning as in general formula (I), is reacted with b) x-u mols of one or more species of alkylene oxide A¹O with A¹ having the same meaning as in formula (I) and
c) one or more species of a glycidylether according to general formula (V) 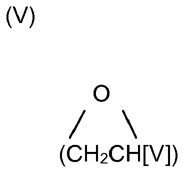 wherein in general formula (V) the parameter [V] has the same meaning as in formula (II)
and in a second reaction step jj) the resulting polyether alcohol from the first reaction step is esterified with an unsaturated acid U-COOH and/or its acid derivatives, preferably with (meth)acrylic acid and/or (meth)acrylic acid derivatives.

12. (Co)polymer containing structural units being derived from the polyether macromonomers according to any of claims 1 to 9, preferably the polyether macromonomer being incorporated into the (co)polymer by radical polymerization.

13. (Co)polymer according to claim 12 containing acid structural units, preferably carboxylic acid structural units, wherein preferably the (co)polymer is obtained by radical polymerization of acid monomers, preferably carboxylic acid monomers, and the polyether macromonomers according to any of claims 1 to 9.

14. (Co)polymer according to claim 12 or 13, wherein the acid structural unit is produced in the copolymer by incorporation of the acid monomer in the form of polymerized units, which structural unit is in accordance with one of the general formulae (VIa), (VIb), (Vlc) and/or (VId) 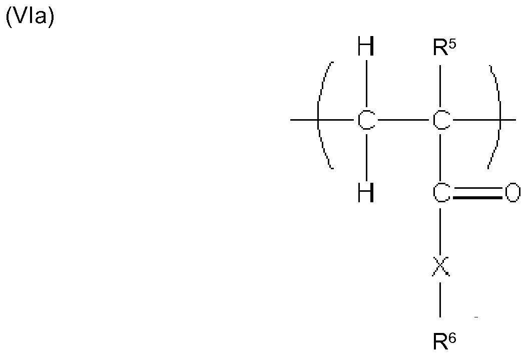 where
R⁵ are identical or different and are represented by H and/or a non-branched chain or branched C₁ - C₄ alkyl group;
X are identical or different and are represented by NH-(CₙH₂ₙ) where n = 1, 2, 3 or 4 and/or O-(CₙH₂ₙ) where n = 1, 2, 3 or 4 and/or by a unit not present;
R⁶ are identical or different and are represented by OM, SO₃M, PO₃M₂, O-PO₃M₂ and/or para-substituted C₆H₄-SO₃M, with the proviso that, if X is a unit not present, R⁶ is represented by OM;
M is independently from each other H, an ammonium ion, alkali cation or any other cation with the proviso that the mol number of the cation is divided with its number of catonic charges, preferably the cation is ½ earth alkali cation or an alkali cation, 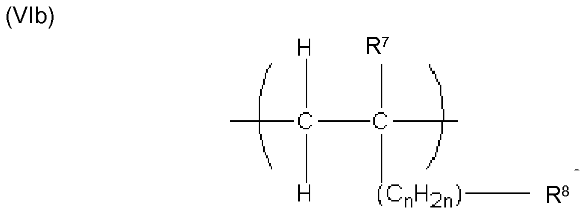
where
R⁷ are identical or different and are represented by H and/or a non-branched chain or a branched C₁ - C₄ alkyl group;
n = 0, 1, 2, 3 or 4;
R⁸ are identical or different and are represented by SO₃M, PO₃M₂, O-PO₃M₂ and/or para-substituted C₆H₄-SO₃M, M has the before mentioned meaning; 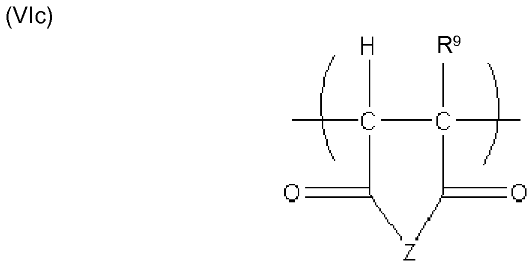
where
R⁹ are identical or different and are represented by H and/or a non-branched chain or a branched C₁ - C₄ alkyl group;
Z are identical or different and are represented by O and/or NH; 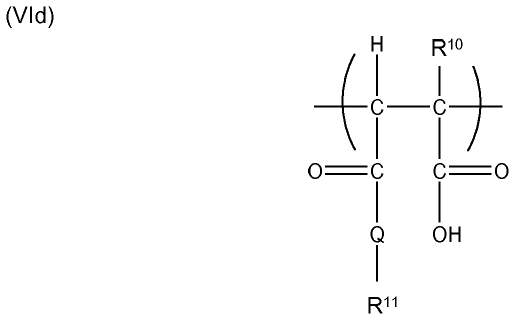
where
R¹⁰ are identical or different and are represented by H and/or a non-branched chain or branched C₁ - C₄ alkyl group;
Q are identical or different and are represented by NH and/or O;
R¹¹ are identical or different and are represented by H, (CₙH₂ₙ)-SO₃M where n = 0, 1, 2, 3 or 4, (CₙH₂ₙ)-OH where n = 0, 1, 2, 3 or 4; (CₙH₂ₙ)-PO₃M₂ where n = 0, 1, 2, 3 or 4, (CₙH₂ₙ)-OPO₃M₂ where n= 0, 1, 2, 3 or 4, (C₆H₄)-SO₃M, (C₆H₄)-PO₃M₂, (C₆H₄)-OPO₃M₂ and/or (CₘH₂ₘ)ₑ-O-(A'O)_{α} -R¹² where m = 0, 1, 2, 3 or 4, e = 0, 1, 2, 3 or 4, A' = C_{x'}H_{2x'} where x' = 2, 3, 4 or 5 and/or CH₂C(C₆H₅)H-, α= an integer from 1 to 350 where R¹² are identical or different and are represented by a non-branched chain or a branched C₁ - C₄ alkyl group, M has the before mentioned meaning.

15. (Co)polymer according to any of claims 12 to 14, wherein the acid structural unit is derived from carboxylic acid monomers selected from the group of (meth)acrylic acid, maleic acid and/or maleic anhydride.

16. Method of use of (co)polymers according to any of claims 12 to 15 as a dispersant for aqueous mixtures of inorganic particles, preferably for inorganic binders selected from the group of (Portland) cement, α -calciumsulfate-hemihydrat, β - calciumsulfate-hemihydrate, calciumsulfate in the form of anhydrite, lime, furnace slag, fly ash, silica fume, natural puzzolane and/or calcined oil shale, preferably (Portland) cement is contained with a weight percentage higher than 40 % with respect to the sum of the inorganic binders.

17. Method of use of (co)polymers according to any of claims 12 to 15 as a means for the reduction of the viscosity of aqueous mixtures of inorganic particles, preferably for inorganic binders selected from the group of (Portland) cement, α - calciumsulfate-hemihydrat, β-calciumsulfate-hemihydrate, calciumsulfate in the form of anhydrite, lime, furnace slag, fly ash, silica fume, natural puzzolane and/or calcined oil shale, preferably (Portland) cement is contained with a weight percentage higher than 40 % with respect to the sum of the inorganic binders.

18. Method of use of (co)polymers according to any of claims 12 to 15 as a grinding aid for the production of (Portland) cement.

19. Building material mixtures containing a (co)polymer according to any of claims 12 to 15 and inorganic binders selected from the group of (Portland) cement, α - calciumsulfate-hemihydrat, β-calciumsulfate-hemihydrate, calciumsulfate in the form of anhydrite, lime, furnace slag, fly ash, silica fume, natural puzzolane and/or calcined oil shale, preferably (Portland) cement is contained with a weight percentage higher than 40 % with respect to the sum of the inorganic binders, optionally water is contained.
